# EUROPÄISCHE PATENTSCHRIFT

(11) **EP 0 775 818 B1**
(45) Veröffentlichungstag und Bekanntmachung des Hinweises auf die Patenterteilung: **15.05.2002**
(21) Anmeldenummer: 96116935.6
(22) Anmeldetag: 22.10.1996
(51) Int. Cl.: F02D 41/06, F02D 41/08, F02D 35/00, B60H 1/02

(54) **Betriebsverfahren für eine Fahrzeug-Brennkraftmaschine mit Leerlauf-Drehzahl-Regelung**
Method of operation for the engine of a vehicle with idling speed regulation
Procédé de fonctionnement du moteur d'un véhicule avec régulation du régime de ralenti

(30) Priorität: 24.11.1995 DE 19543783
(43) Veröffentlichungstag der Anmeldung: 28.05.1997
(73) Patentinhaber: Bayerische Motoren Werke Aktiengesellschaft, 80788 München (DE)
(72) Erfinder: Lemberger, Heinz, 85774 Unterföhring (DE); Huemer, Gerhart, 80333 München (DE)
(74) Vertreter: Bücken, Helmut

(56) Entgegenhaltungen:
- DE-C- 4 200 806
- US-A- 4 335 849
- US-A- 4 346 686
- PATENT ABSTRACTS OF JAPAN vol. 008, no. 037 (M-277), 17. Februar 1984 & JP 58 194619 A (NIPPON DENSO KK), 12. November 1983
- PATENT ABSTRACTS OF JAPAN vol. 015, no. 393 (M-1165), 4. Oktober 1991 & JP 03 160136 A (NISSAN MOTOR CO LTD), 10. Juli 1991

## Beschreibung

Die Erfindung betrifft ein Betriebsverfahren für eine Fahrzeug-Brennkraftmaschine, deren Drehzahl, insbesondere Leerlauf-Drehzahl, von einer elektronischen Steuereinheit unter Berücksichtigung von Randbedingungen eingestellt wird, wobei die Brennkraftmaschinen-Abwärme zur Beheizung des Fahrzeuges nutzbar ist und eine Beheizungs-Anforderung im Sinne einer Drehzahl-Erhöhung berücksichtigt wird. Ein derartiges Betriebsverfahren ist aus der US 4,346,686 bekannt.

Fahrzeug-Brennkraftmaschinen mit sog. elektronischer Leerlauf-Drehzahlregelung sind allgemeiner Stand der Technik. Dabei bedingt der Zwang zu verbrauchs- und emissionsarmen Kraftfahrzeugen auch eine Absenkung des Leerlaufdrehzahlniveaus. Mittlerweile sind Leerlaufdrehzahlen von ca. 500 bis 600 U/min üblich. Dieser Wunsch nach einem niedrigen Drehzahlniveau besteht bei Brennkraftmaschinen dabei generell, d. h. auch in niedrigen Belastungsbereichen, wenn beispielsweise in Verbindung mit einem Automatikgetriebe durch entsprechende Wahl der Getriebe-Übersetzung ebenfalls ein möglichst niedriges Brennkraftmaschinen-Drehzahlniveau eingestellt wird.

Dieses niedrige Drehzahlniveau der Brennkraftmaschine, insbesondere im Leerlauf, hat zur Folge, daß erwünschtermaßen die von der Brennkraftmaschine anfallende Abwärme geringer wird. Unter gewissen Betriebsbedingungen, nämlich dann, wenn diese Abwärme zur Beheizung des von der Brennkraftmaschine angetriebenen Fahrzeuges tatsächlich benötigt wird, ist diese Auswirkung des niedrigen Drehzahlniveaus jedoch unerwünscht, da dann lediglich eine reduzierte Heizleistung zur Verfügung steht. Als Abhilfemaßnahme hierfür wird in der US 4,346,686 vorgeschlagen, daß als Randbedingung zur Einstellung der Brennkraftmaschinen-Drehzahl eine Beheizungs-Anforderung im Sinne einer Drehzahl-Erhöhung berücksichtigt wird.

Hier weitere Verbesserungen aufzuzeigen, ist Aufgabe der vorliegenden Erfindung.
Zur Lösung dieser Aufgabe wird vorgeschlagen, daß die Drehzahl, insbesondere Leerlauf-Drehzahl, dann, wenn bereits eine Drehzahlanhebung aufgrund einer anderen Bedingung vorliegt, stets um die auf den vorgewählten Maximalwert fehlende Differenzdrehzahl angehoben wird.

In der Erkenntnis, daß aufgrund des mittlerweile erreichten Leerlaufdrehzahlniveaus bei üblichen Brennkraftmaschinen die im Heizungswärmetauscher durchgesetzte Kühlmittelmenge ca. 150 L/h beträgt, wohingegen für die Sicherstellung der Grundfunktion der Heizanlagen, d. h. für die Bereitstellung einer ausreichenden Heizleistung mindestens 200 bis 350 L/h notwendig wären, soll grundsätzlich dann, wenn eine hohe Beheizungs-Anforderung vorliegt, die Drehzahl/Leerlauf-Drehzahl der Brennkraftmaschine erhöht werden. Dies hat, wie bereits bekannt ist, einen erhöhten Durchsatz von Brennkraftmaschinen-Kühlmittel, das die Brennkraftmaschinen-Abwärme zur Verfügung stellt, durch den Heizungswärmetauscher des Kraftfahrzeuges zur Folge. Somit kann eine erhöhte Wärmemenge zu Heizzwecken abgegeben werden. Vorteilhafterweise stellt sich bei einer Erhöhung der Leerlauf-Drehzahl beispielsweise um 200 U/min nicht nur ein um 35 bis 40 % höherer Kühlmitteldurchsatz im Heizungs-Wärmetauscher ein, sondern gleichzeitig wird durch die Drehzahl-Erhöhung der Brennstoffdurchsatz in der Brennkraftmaschine angehoben, was in der Folge zu einem heißeren Kühlmittelangebot, d. h. zu einer größeren Abwärmemenge führt. Die Drehzahl-Erhöhung wirkt sich somit doppelt im Sinne einer gesteigerten Heizenergie-Abgabe aus.

Um nun jedoch keine unnötige Drehzahlerhöhung einzuleiten, kann eine Abfrage vorgesehen sein, ob beispielsweise ausgehend von einer Mindest-Leerlaufdrehzahl der Brennkraftmaschine bereits aufgrund anderer Randbedingungen eine Erhöhung dieser Leerlaufdrehzahl ausgelöst wurde. Sollte dies der Fall sein, so ist es nicht erforderlich, bei einer zusätzlichen Beheizungs-Anforderung die Leerlaufdrehzahl nochmals zu erhöhen, da bereits eine ausreichend hohe sowie eine ausreichende Heizenergieabgabe sicherstellende Leerlauf-Drehzahl eingeregelt wurde.
Erfindungsgemäß soll nun die Drehzahl, insbesondere Leerlauf-Drehzahl dann, wenn bereits eine Drehzahlanhebung aufgrund einer anderen Bedingung vorliegt, stets um die auf den vorgewählten Maximalwert (im Sinne einer Bereitstellung von Heizenergie) fehlende Differenzdrehzahl angehoben werden.

Bei den zusätzlichen Randbedingungen, die neben der Beheizungs-Anforderung eine von der elektrischen Steuereinheit initiierte Drehzahl-Erhöhung initiieren, kann es sich beispielsweise um einen Kaltstart der Brennkraftmaschine handeln, d.h. in der sich an einen Kaltstart anschließenden Warmlaufphase der Brennkraftmaschine wird - wie dem Fachmann bekannt - die Leerlauf-Drehzahl der Brennkraftmaschine ohnehin gegenüber dem Wert bei betriebswarmer Brennkraftmaschine erhöht. Als weitere Randbedingung kann beispielsweise ein Generatorbetrieb genannt werden, d. h. ein von der Brennkraftmaschine angetriebener Generator fragt nach einer gewissen Mindestdrehzahl bzw. einem Mindestleistungsangebot nach, wozu die Brennkraftmaschine ebenfalls wieder mit einer gewissen Leerlaufdrehzahl betrieben werden muß. Erfindungsgemäß soll die Drehzahl, insbesondere Leerlauf-Drehzahl dann, wenn bereits eine Drehzahlanhebung aufgrund einer anderen Bedingung vorliegt, stets um die auf den vorgewählten Maximalwert (im Sinne einer Bereitstellung von Heizenergie) fehlende Differenzdrehzahl angehoben werden.

Im übrigen kann es empfehlenswert sein, die Beheizungs-Anforderung nur dann im Sinne einer Drehzahl-Erhöhung zu berücksichtigen, wenn diese Beheizungs-Anforderung oberhalb eines gewissen Mindestwertes liegt. Nicht erforderlich ist es nämlich, bei Nachfrage nach einer lediglich geringen Heizleistung die Drehzahl der Brennkraftmaschine zu erhöhen, wenn für Bereitstellung dieser geringen Heizleistung die geringe Brennkraftmaschinen-Drehzahl ausreichend ist. So kann beispielsweise vorgesehen sein, die Randbedingung einer Beheizungs-Anforderung im Sinne einer Drehzahl-Erhöhung nur dann zu berücksichtigen, wenn sich ein im Fahrzeug vorgesehener Heizungsschalter bzw. Temperaturvorgabewähler in seiner Maximalstellung (oder auch in einer beliebig wählbaren Einstellung) befindet. Entsprechendes gilt für elektronisch geregelte Heizanlagen von Kraftfahrzeugen, wobei die Beheizungsanforderung im Sinne einer Drehzahl-Erhöhung nur dann berücksichtigt werden kann, wenn der Temperaturregler dieser elektronisch geregelten Heizanlage einen Maximal-Wunschwert (oder einen beliebig wählbaren Wunschwert) einnimmt.

Zusammenfassend wird somit vorgeschlagen, bei Vorliegen eines entsprechenden Signales von der Fahrzeug-Heizungsanlage die Leerlaufdrehzahl der Brennkraftmaschine anzuheben. Dabei kann bei einer mechanischen Heizungsregelung z. B. bei Maximalstellung des entsprechenden Schalters (sog. Defrost-Stellung) oder bei einem beliebig wählbaren Einstellwert die gewünschte Drehzahlanhebung mit anderen Störaufschaltungsparametern für die Drehzahlregelung verglichen werden und um die noch fehlende Drehzahldifferenz um beispielsweise 200 U/min angehoben werden. Wurde die Drehzahl nicht bereits angehoben, so erfolgt dann eine Anhebung um beispielsweise maximal 200 U/min über die elektronische Steuereinheit. Entsprechendes gilt bei einer elektronischen Temperaturregelung für die Fahrzeugheizung, wobei entsprechende Maximalwerte des Temperaturreglers dieser elektronischen Fahrzeugheizanlage berücksichtigt werden. Der Vollständigkeit halber soll schließlich noch darauf hingewiesen werden, daß die. Erfindung keineswegs auf der Anhebung einer Leerlauf-Drehzahl beschränkt ist, vielmehr kann, insbesondere wenn die Brennkraftmaschinendrehzahl gemeinsam mit einer Getriebeübersetzung von einer elektronischen Steuereinheit festgelegt wird, auch dann bei Vorliegen einer insbesondere einen Mindestwert überschreitenden Beheizungs-Anforderung eine generelle Drehzahl-Erhöhung der Brennkraftmaschine ausgelöst werden.

## Patentansprüche

1. Betriebsverfahren für eine Fahrzeug-Brennkraftmaschine, deren Drehzahl, insbesondere Leerlauf-Drehzahl, von einer elektronischen Steuereinheit unter Berücksichtigung von Randbedingungen eingestellt wird, wobei die Brennkraftmaschinen-Abwärme zur Beheizung des Fahrzeuges nutzbar ist, und eine Beheizungs-Anforderung im Sinne einer Drehzahl-Erhöhung berücksichtigt wird,
**dadurch gekennzeichnet, daß** die Drehzahl, insbesondere Leerlauf-Drehzahl, dann, wenn bereits eine Drehzahlanhebung aufgrund einer anderen Bedingung vorliegt, stets um die auf den vorgewählten Maximalwert fehlende Differenzdrehzahl angehoben wird.

2. Betriebsverfahren nach Anspruch 1,
**dadurch gekennzeichnet, daß** eine frei wählbare Beheizungs-Anforderung oberhalb eines Mindestwertes berücksichtigt wird.

## Claims

1. A method of operating a vehicle engine having a speed, especially an idling speed, which is set by an electronic control unit allowing for boundary conditions, using the waste heat from the engine for heating the vehicle and allowing for a heating requirement in the sense of a speed increase,
**characterised in that** if the speed is already being increased as a result of another condition, the speed, especially the idling speed, is always raised by the differential speed needed to reach the preselected maximum value.

2. A method of operation according to claim 1,
**characterised in that** a freely selectable heat requirement above a minimum value is allowed for.

## Revendications

1. Procédé de mise en oeuvre d'un moteur à combustion interne de véhicule dont le régime (vitesse de rotation), notamment le régime de ralenti, est réglé par une unité de commande électronique en tenant compte des conditions limites, selon lequel on utilise la chaleur dégagée par le moteur à combustion interne pour chauffer le véhicule et on tient compte d'une demande de chauffage dans le sens d'un relèvement de la vitesse de rotation,
**caractérisé en ce qu'**
on relève la vitesse de rotation, notamment la vitesse de rotation de ralenti, s'il existe déjà une demande de relèvement de la vitesse pour une autre condition et ce relèvement se fait de la différence de vitesse de rotation maximale manquante jusqu'à la valeur maximale présélectionnée.

2. Procédé de mise en oeuvre d'un moteur à combustion interne selon la revendication 1,
**caractérisé en ce qu'**
on tient compte d'une demande de chauffage choisie librement, au-dessus d'une valeur minimale.
